(19) Europäisches Patentamt
European Patent Office
Office européen des brevets

(11) Numéro de publication : **0 394 430 B1**

(12) # FASCICULE DE BREVET EUROPEEN

(45) Date de publication du fascicule du brevet : **13.01.93 Bulletin 93/02**

(51) Int. Cl.[5] : **G01N 30/96**

(21) Numéro de dépôt : **89912458.0**

(22) Date de dépôt : **26.10.89**

(86) Numéro de dépôt international : **PCT/FR89/00558**

(87) Numéro de publication internationale : **WO 90/04780 03.05.90 Gazette 90/10**

(54) **PROCEDE DE DETERMINATION DE LA CONCENTRATION D'UN SOLUTE IONIQUE OU IONISABLE EN CHROMATOGRAPHIE PAR EXCHANGE D'IONS.**

(30) Priorité : **27.10.88 FR 8814038**

(43) Date de publication de la demande : **31.10.90 Bulletin 90/44**

(45) Mention de la délivrance du brevet : **13.01.93 Bulletin 93/02**

(84) Etats contractants désignés : **CH DE GB LI SE**

(56) Documents cités :
**EP-A- 0 274 396**
**ANALYTICAL CHEMISTRY, vol. 57, no. 12, octobre 1985, American Chemical Society; M. DOURY-BERTHOD et al.: "Theoreticalapproach of dual-column ion chromatography", pages 2257-2258**

(56) Documents cités :
**ANALYTICA CHIMICA ACTA, vol. 156, 1984, Elsevier Science Publishers B.V., Amsterdam, NL; M.J. VAN OS et al.: "Linearcalibration in ion chromatography by calculating total amounts of sample from measured conductivity data", pages 170-173**

(73) Titulaire : **COMMISSARIAT A L'ENERGIE ATOMIQUE Etablissement de Caractère Scientifique Technique et Industriel
31/33, rue de la Fédération
F-75015 Paris (FR)**

(72) Inventeur : **DOURY-BERTHOD, Michèle
9, hameau de la Féverie
F-91190 Gif-sur-Yvette (FR)**
Inventeur : **GIAMPAOLI, Pierre
5, rue Couprie
F-91120 Montrouge (FR)**

(74) Mandataire : **Mongrédien, André et al
c/o BREVATOME 25, rue de Ponthieu
F-75008 Paris (FR)**

EP 0 394 430 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention se rapporte à un procédé de détermination de la concentration d'un soluté ionique ou ionisable en chromatographie ionique, ou de façon plus précise en chromatographie par échange d'ions, par calcul de la concentration d'ions hydrogène.

La chromatographie ionique consiste à introduire un échantillon de la solution contenant le soluté à quantifier, au sommet d'une colonne garnie d'un échangeur d'ions, et à y faire circuler en continu une autre solution de composition connue appelée éluant.

Le soluté et les espèces de l'éluant sont dissous au moins partiellement. L'échangeur d'ions est un solide poreux divisé, insoluble dans l'eau mais qui, à son contact, s'en imprègne et qui contient des groupements fonctionnels greffés en quantité fixée. Ceux-ci sont ionisés, la charge de l'espèce ionique greffée étant compensée par celle d'ions de signe opposé appelés contre-ions. Ces derniers sont mobiles et peuvent s'échanger avec d'autres ions (ions échangeables), de même signe, présents dans la solution extérieure aux particules d'échangeur d'ions imbibées d'eau. Ces particules d'échangeur d'ions imbibées d'eau constituent la phase stationnaire. Lorsqu'elle est en contact prolongée avec l'éluant, la phase stationnaire prend une composition constante : les contre-ions sont uniquement constitués des ions échangeables de l'éluant. L'éluant (ou solution éluante) est la solution de composition constante qui est apportée en continu, au moyen d'une pompe, au sommet de la colonne. La phase mobile est la solution qui s'écoule dans la colonne, au contact de la phase stationnaire.

Après leur injection, les ions échangeables du soluté progressent peu à peu dans la colonne, sous l'effet de la percolation continue de l'éluant, par l'intermédiaire de réactions d'échange d'ions avec les ions de l'éluant contenus en phases mobile et stationnaire. Une cellule de mesure disposée à un emplacement déterminé de la colonne, en particulier à sa sortie, détecte une grandeur caractéristique de la composition de la phase mobile à cet endroit, phase que l'on désignera par éluat ; cette composition dépend des équilibres mis en jeu dans la colonne en amont de la cellule.

Dans le cas de l'injection d'un mélange de solutés, les différents ions échangeables desdits solutés migrent avec des vitesses différentes qui sont fonction des affinités relatives de ces espèces pour la phase stationnaire.

La conductivité de l'éluat est fréquemment la grandeur caractéristique mesurée, et cette méthode est utilisée aussi bien dans les systèmes avec ou sans suppression chimique. En effet, il est classique de subdiviser cet ensemble de techniques en deux familles selon que le procédé interpose ou non un réacteur dit de "suppression chimique" entre la colonne de séparation et le détecteur. L'objet de ce réacteur, spécialement conçu pour la détection conductométrique, est de réduire la conductance résiduelle de l'éluant tout en exaltant celle du soluté à analyser, par le biais de réactions d'échange d'ions et de neutralisation acido-basique. Il en résulte que les systèmes à suppression chimique conduisent, de par leur principe, à des valeurs de rapport signal sur bruit plus élevées que les systèmes sans suppression chimique.

Pour déterminer la concentration d'un soluté dans l'éluat sans passer par la construction d'une courbe d'étalonnage, il est essentiel de disposer de l'expression mathématique du signal d'analyse. Celui-ci est fonction des concentrations des espèces ioniques constituant l'éluat, ainsi que des concentrations des espèces ioniques constituant l'éluant. La comparaison du signal expérimental à son expression théorique permet de déduire la concentration totale du soluté, sous toutes ses formes, présent dans l'éluat. Cette opération peut être reproduite pour tous les solutés qui parviennent successivement au détecteur, leur reconnaissance étant réalisée au moyen d'une méthode spécifique de repérage prédéterminée pour le système chromatographique utilisé, telle que la vitesse de progression dans la colonne de séparation.

Dans le cas de la conductométrie en particulier, on ne s'intéresse qu'à la concentration des espèces ioniques de l'éluat qui seules contribuent au signal.

Divers auteurs ont déjà proposé de telles expressions mathématiques dans des cas particuliers. On peut renvoyer aux articles parus dans Analytical Chemistry, 1981, 53, pp. 2324-2327 et 1984, 56, pp. 1177-1182, dans Journal of Chromatography, 1984, 284, pp. 149-156 et Analytical Chemistry Acta, 1984, 156, pp. 169-180.

D'une façon générale, ces expressions ne sont valables que pour des cas particuliers simplifiés qui impliquent des hypothèses restrictives sur la nature de l'éluant ou celle du soluté et comportent parfois des erreurs. Il est en particulier nécessaire de tenir compte des déplacements éventuels des équilibres de dissociation des espèces de l'éluant qui provoquent des variations des proportions de ses différentes formes acido-basiques dans la phase mobile.

Une expression mathématique générale correcte du signal a été fournie dans un cas particulier par les inventeurs et exposée dans Analytical Chemistry, 1985, 57, pp. 2257-2263.

Cette expression mathématique n'a été développée que pour la chromatographie à suppression chimique et conduit à une formulation compliquée du signal théorique (relation 15 de cet article). Dans la suite de cet

article, on ne s'intéresse d'ailleurs qu'au cas où le soluté existe sous forme d'une seule espèce anionique dans la cellule de mesure. En outre, il a fallu supposer que le soluté était présent dans la colonne de séparation, contenant la phase stationnaire, sous forme d'une seule espèce anionique (éventuellement différente de la précédente), que les espèces de l'éluant n'étaient présentes dans la cellule de mesure que sous forme non dissociée et sous leur forme acide moléculaire en équilibre avec la base conjuguée mono-anionique correspondante, et enfin que la concentration en ions hydroxyde était négligeable devant celle des autres ions.

La constatation de ces insuffisances a conduit à l'élaboration du procédé de l'invention, qui est valable pour les deux types de chromatographie, pour des éluants constitués de solutions d'acides faibles ou forts monoprotiques ou polyprotiques, d'un sel d'un acide monoprotique ou d'un mélange de l'acide et de son sel, d'un sel d'acide diprotique ou du mélange de plusieurs des formes acido-basiques de cet acide et pour tout soluté ionisable dont l'anion appartient au système acido-basique d'un acide mono- ou polyprotique fort ou faible, cet anion pouvant exister dans la colonne de séparation ainsi que dans le réacteur chimique de suppression sous plusieurs formes. Le procédé obtenu conduit à une détermination exacte, sans approximation, de la courbe de signal théorique.

Ces avantages sont obtenus grâce à une formulation de la concentration des ions hydrogène en fonction uniquement de la concentration des espèces constituant le soluté, sans faire intervenir directement le coefficient de dissociation de la forme acido-basique moléculaire du système acido-basique éluant.

Plus précisément, l'invention est relative à un procédé de détermination de la concentration d'un soluté dans un éluat, le soluté étant au moins en partie dissocié sous forme d'au moins une espèce anionique, l'éluat étant également constitué notamment d'ions hydrogène et d'espèces appartenant au système acido-basique d'un éluant au moins en partie dissociées sous forme d'au moins une espèce anionique, la dissociation de ces espèces ainsi que de celles du soluté produisant notamment des ions hydrogène, la composition de l'éluat étant gouvernée notamment par des réactions d'échange d'ions préalablement mises en jeu dans la colonne de séparation entre les espèces anioniques de l'éluant et celles du soluté, ainsi qu'éventuellement par d'autres réactions chimiques notamment d'échange d'ions et de neutralisation acido-basique dans un réacteur dit de suppression chimique, caractérisé en ce qu'il consiste :

- à calculer la concentration des ions hydrogène en fonction uniquement de la concentration du soluté à l'aide :
- des constantes de dissociation des espèces acides susceptibles d'être mises en jeu,
- des proportions, invariables, pour un soluté donné dans un système chromatographique donné, d'anions du soluté qui s'échangent dans la colonne de séparation avec les espèces éluantes de différentes valences,
- des proportions des espèces du soluté en solution dans la colonne de séparation,
- de la concentration totale des espèces constitutives de l'éluant et de la concentration de l'espèce cationique associée aux espèces éluantes salines dans l'éluant,
- puis à calculer les concentrations dans l'éluat de certains au moins de ses constituants, en fonction de la concentration du soluté, à l'aide de la concentration des ions hydrogène,
- puis à calculer une fonction de signal théorique composé de la superposition d'effets provenant des variations de concentration des constituants de l'éluat dont on a calculé la concentration dans l'étape précédente,
- puis enfin à situer un signal expérimental sur la fonction de signal théorique pour en déduire la concentration du soluté.

La concentration des ions hydrogène est avantageusement calculée par itérations successives. Le signal expérimental et la courbe de signal théorique peuvent être obtenus respectivement par mesure et calcul de la conductivité de l'éluat.

Le procédé peut être entièrement automatisé. On peut reconnaître la nature d'un soluté d'après le volume d'éluat écoulé depuis l'introduction de ce soluté jusqu'au maximum de son pic d'élution, après quoi on effectue une succession de mesures qui fournissent par comparaison avec la courbe de signal théorique les concentrations successives du soluté dans le détecteur, et on obtient finalement la quantité totale du soluté par intégration sur le pic chromatographique.

Le système chromatographique peut comporter ou non une suppression chimique.

On va maintenant décrire à titre illustratif et non limitatif un exemple concret utilisant, dans un système de chromatographie ionique sans suppression chimique, un éluant diacide faible avec une forme saline éventuelle. Le soluté est ici un polyacide faible. On pourra facilement, à partir de cet exemple, parvenir aux équations et relations qui régissent d'autres éluants et solutés.

La composition de l'éluat est régie par les équilibres suivants :

- dissociation acido-basique des espèces acides de l'éluant ,

$$H_2L \rightleftarrows H^+ + HL^- \qquad (1)$$

et

$$HL^- \rightleftarrows H^+ + L^{2-} \quad (2)$$

- dissociation acido-basique de la forme acide du soluté, que l'on peut décrire par un équilibre moyen,

$$H_nX \rightleftarrows mH^+ + H_{n-m}X^{m-} \quad (3),$$

- dissociation de l'eau,

$$H_2O \rightleftarrows H^+ + OH^- \quad (4)$$

- équilibres d'échange d'ions entre les espèces anioniques du soluté et celles de l'éluant, entre la phase stationnaire et la phase mobile dans la colonne de séparation,

$$H_{n-m}X^{m-} + m\overline{HL^-} \rightleftarrows \overline{H_{n-m}X^{m-}} + mHL^- \quad (5)$$

$$H_{n-m}X^{m-} + \frac{m}{2}\overline{L^{2-}} \rightleftarrows \overline{H_{n-m}X^{m-}} + \frac{m}{2}L^{2-} \quad (6)$$

où les symboles surmontés d'une barre se rapportent aux espèces présentes dans la phase stationnaire.

Les équilibres (1), (2), (3) et (4) sont caractérisés par les constantes $k_i$, $K_{a1}$, $K_{a2}$, connues de l'utilisateur et données par les relations suivantes:

$$k_i = [H^+] . [OH^-] \quad (7)$$

$$K_{a1} = [H^+] . [HL^-] . [H_2L]^{-1} \quad (8)$$

$$K_{a2} = [H^+] . [L^{2-}] . [HL^-]^{-1} \quad (9)$$

On a supposé que la réaction de dissociation du soluté était unique, mais en réalité le soluté peut être présent sous forme d'un mélange d'espèces anioniques ; m désigne alors la charge moyenne des espèces anioniques du soluté dans l'éluat et peut donc ne pas être un nombre entier. Le raisonnement qui suit ne change pas.

La nature de l'espèce moyenne $H_{n-m}X^{m-}$ du soluté est déterminée à partir des constantes de dissociation $K_i$ , des différentes espèces acides de ce soluté, évidemment connues de l'utilisateur et exprimées par :

$$K_i = [H^+][H_{n-i}X^{i-}][H_{n-i+1}X^{(i-1)-}]^{-1} \quad (10)$$

La valeur de m est déterminée à partir de la relation :

$$m = \sum_{i=1}^{i=n} \alpha_{n-i} . i \quad (11)$$

dans laquelle $\alpha_{n-i}$ représente la proportion de l'espèce $H_{n-i}X^{i-}$ dans l'éluant, exprimée par :

$$\alpha_{n-i} = \frac{\left[ H_{n-i} X^{i-} \right]}{\sum_{i=0}^{i=n} \left[ H_{n-i} X^{i-} \right]} \quad (12)$$

On appelle respectivement $C_E$, $C_M$ et $C_X$ la concentration totale des espèces constitutives de l'éluant, la concentration de l'espèce cationique associée aux espèces éluantes salines dans l'éluant et la concentration totale des espèces constitutives du soluté dans l'éluat.

Le coefficient β désigne la fraction de soluté s'échangeant avec l'espèce divalente de l'éluant dans la colonne de séparation, c'est-à-dire que β est égal à 0 si la phase stationnaire ne contient que des ions $HL^-$ et β=1 si elle ne contient que des ions $L^{2-}$.

Le bilan massique des espèces de l'éluant dans l'éluat est exprimé par la relation :

$$\left[ H_2L \right] + \left[ HL^- \right] + \left[ L^{2-} \right] = C_E - m \left(1 - \frac{\beta}{2}\right) C_X \quad (13)$$

La loi d'électroneutralité de ce système est exprimée par la relation (14) :

$$\left[ H^+ \right] = \left[ OH^- \right] + \left[ HL^- \right] + 2 \left[ L^{2-} \right] + m \left[ H_{n-m} X^{m-} \right] - \left[ M^+ \right] \quad (14)$$

Si on se reporte aux relations (7) à (13), la relation (14) est équivalente à la relation (15) :

$$\left[ H^+ \right] = \frac{K_i}{\left[ H^+ \right]} + \frac{K_{a1} \left[ \left( C_E - m \left(1 - \frac{\beta}{2}\right) C_X \right] \right.}{\left[ H^+ \right] F_H} + \frac{2\, K_{a1} . K_{a2} \left[ C_E - m \left(1 - \frac{\beta}{2}\right) C_X \right]}{\left[ H^+ \right]^2 F_H} + m C_X - C_M \quad (15)$$

Dans la relation (15), la seule inconnue est $C_X$ car les concentrations $C_E$ et $C_M$ de l'éluant sont choisies par l'utilisateur; β a été déterminé dans une étape antérieure comme on va y revenir plus loin. Le coefficient $F_H$ a été introduit par commodité et son expression est définie dans l'équation :

$$F_H = 1 + \frac{K_{a1}}{\left[ H^+ \right]} + \frac{K_{a1} . K_{a2}}{\left[ H^+ \right]^2} \quad (16)$$

Contrairement à l'article antérieur publié par les inventeurs, la relation (15) donnant la concentration des ions hydrogène à partir de la loi d'électroneutralité est une équation implicite, qui prend en compte les équilibres de dissociation acido-basiques de toutes les espèces acides présentes dans l'éluat, alors que la relation (11)

de l'article antérieur ne considérait que l'équilibre de dissociation de la forme acide moléculaire du système acido-basique de l'éluant qui était exprimée à travers le coefficient de dissociation $\alpha$.

Pour un nombre suffisant de valeurs plausibles de $C_X$, on calcule par un processur itératif la concentration des ions hydrogéne correspondante. Il est alors possible pour chacune des valeurs de $C_X$ de calculer les concentrations des anions : $OH^-$, $HL^-$, $L^{2-}$ à l'aide des relations (17), (18), (19) et (20) que l'on peut déduire des relations précédentes.

$$[H_2L] = \frac{C_E - (1 - \frac{\beta}{2})\, m\, C_X}{F_H} \qquad (17)$$

$$[HL^-] = \frac{K_{a1}\left[C_E - (1 - \frac{\beta}{2})\, m\, C_X\right]}{[H+]\; F_H} \qquad (18)$$

$$[L^{2-}] = \frac{K_{a1}\, K_{a2}\left[C_E - (1 - \frac{\beta}{2})\, m\, C_X\right]}{[H^+]^2\; F_H} \qquad (19)$$

$$[OH^-] = \frac{k_i}{[H^+]} \qquad (20)$$

Dans le cas fréquemment utilisé d'une détection par conductométrie, le signal théorique est donné par l'expression :

$$\Delta G = \frac{1000}{k}\left[\sum_{i=1}^{n} \lambda^\circ_{\left[\frac{1}{i}(H_{n-i}X^{i-})\right]}\; i\,\alpha_{n-i}\, C_X + \lambda^\circ_{HL}\, \Delta[HL^-] + 2\lambda^\circ_{\frac{1}{2}L^{2-}}\, \Delta[L^{2-}] + \lambda^\circ_{H^+}\, \Delta[H^+] + \lambda^\circ_{OH^-}\, \Delta[OH^-]\right] \qquad (21)$$

Dans cette expression, $\Delta$ G désigne la conductance de l'éluat en microsiemens, $\lambda°$ les conductivités équivalents limites en siemens.$cm^{-2}$ .$mole^{-1}$ des ions concernés à la température de l'expérience, k désigne la constante de cellule du détecteur exprimée en $cm^{-1}$, $\alpha_{n-i}$ les proportions de chacune des espèces ioniques du soluté, qui peuvent être calculées à l'aide des constantes de dissociation du soluté, et $\Delta$ représente la différence de la grandeur qu'il précède par rapport à l'état sans soluté (C =0).la concentration du cation de l'espèce saline de l'éluant est invariable et n'intervient donc pas dans l'expression du signal. La conductivité équivalente limite d'une espèce à la température t peut être calculée au moyen de la relation :

$$(\lambda°)_t = (\lambda°)_{25} [1 + 0{,}01825 (t-25)] \qquad (22)$$

Le signal théorique $\Delta G$ peut être déterminé en fonction de la concentration $C_X$. Dans un système d'analyse automatique, il est stocké en mémoire sous forme de fonction de bibliothèque.

On effectue au cours de l'élution d'un pic chromatographique une série de mesures de conductivité pour obtenir des signaux expérimentaux que l'on compare à la fonction de bibliothèque. On en déduit donc une valeur expérimentale de concentrations $C_X$ par mesure. La quantité totale de soluté injectée dans la colonne chromatographique est finalement donnée par une intégration en fonction du volume d'éluat qui s'écoule au cours des mesures, c'est-à-dire selon la relation :

$$q_E = \int C_X \, dv \qquad (23)$$

On va maintenant décrire la procédure de calibrage du système comprenant en particulier la détermination de $\beta$.

Une quantité $q_0$ connue de soluté est injectée. Le signal expérimental du pic chromatographique est relevé. Pour utiliser les valeurs de cette quantité $q_0$ et du volume qui correspond à la largeur du pic à mi-hauteur $\delta V$, on peut calculer la concentration maximale théorique $C_{XM}$ du soluté dans le pic, en supposant une distribution gaussienne, par la relation:

$$C_{XM} = \frac{q_0}{\delta V} \sqrt{\frac{5{,}54}{2\pi}} \qquad (24)$$

La concentration ainsi calculée pour la hauteur maximale du pic est introduite dans la relation (15) et la valeur de $\beta$ est ajustée jusqu'à ce que le signal théorique fourni par la relation (21) corresponde au signal mesuré. On a alors une estimation de $\beta$.

Comme cette estimation n'est qu'approchée, on mène ensuite des calculs de vérification : la courbe de signal théorique $\Delta G(C_X)$ correspondant à la valeur de $\beta$ estimée est calculée, après quoi, par comparaison avec les signaux expérimentaux, on calcule les concentrations du soluté en un certain nombre de points du pic et on mène l'intégration de la relation (23) pour vérifier si on retrouve la quantité réelle de soluté injectée. Dans la négative, on ajuste la valeur de $\beta$ jusqu'à ce que l'estimation de la quantité injectée coïncide avec la quantité réelle.

Le calibrage ainsi effectué est définitif pour un système chromatographique donné et pour un soluté donné ; il est inutile de le répéter avant chaque analyse. Il est par ailleurs inutile lorsque les espèces éluantes ne sont présentes dans la phase stationnaire que sous forme d'une seule espèce ionique.

L'analyse d'un soluté inconnu s'effectue tout d'abord en surveillant l'apparition des pics chromatographiques. Pour chacun d'entre eux, on relève les volumes de début et de fin du pic, le volume de rétention du pic, c'est-à-dire le volume au sommet du pic, et la largeur du pic à mi-hauteur, pour une concentration égale à la moitié de la concentration maximale $C_{MAX}$ de soluté du volume correspondant aux volumes d'éluat écoulés depuis l'injection de l'échantillon. On peut ainsi identifier la nature du soluté et déceler un mauvais fonctionnement du système chromatographique (recouvrement partiel ou total des pics chromatographiques, dérive de ces pics,...). Les coefficients qui le caractérisent ($\lambda°$, $\alpha_{n-i}$, m et $\beta$) sont lus sur des mémoires et on détermine, pour chaque point de discrétisation du pic, la concentration $C_X$ du soluté par application et identification d'un point de la courbe de signal théorique au signal expérimental. La quantité du soluté identifié est enfin calculée à l'aide de la relation (23).

Les premiers essais menés en particulier sur les ions chlorure et nitrate avec différents tampons éluants, benzoate et phtalate de sodium en particulier, ont montré que le procédé avait une bonne précision.

Un système de mise en oeuvre du procédé est représenté schématiquement sur la figure. Il comprend une colonne chromatographique 1 remplie d'une résine 2 entre les interstices de laquelle circule la phase mobile. Une cellule conductométrique 3 et un thermomètre 4 sont en contact avec l'éluat. Le système comprend un bloc de calcul 5, un bloc d'analyse de pics 6, une banque de données 7, un fichier 8, un clavier d'entrée 9 et une imprimante 10.

Le bloc de calcul 5 comprend les moyens logiques pour effectuer notamment les calculs correspondant aux relations (19), (21) et (23).

Le bloc d'analyse de pics 6 est relié à la cellule 3 et au thermomètre 4 ; il détecte les variations des signaux émis par la cellule 3, c'est-à-dire l'apparition et la forme des pics chromatographiques ; il mesure la température ; il est pourvu de moyens de mesure du temps qui lui permettent d'enregistrer régulièrement les signaux de la cellule 3 et de mesurer les volumes d'éluat écoulés. Il peut ainsi identifier les solutés inconnus d'après leur volume de rétention.

La banque de données 7 contient les données connues sur les éluants et les solutés les plus courants, en particulier leurs constantes de dissociation acido-basiques et les conductivités équivalentes limites de leurs espèces ioniques à 25°C.

Le fichier 8 contient les données directement utilisables pour l'identification des solutés et le calcul des concentrations et des signaux théoriques, c'est-à-dire en particulier $\alpha_{n-i}$, m, β et les conductivités équivalentes limites correspondant à la température réelle de l'éluant mesurée par le thermomètre 4 ; ces conductivités équivalentes limites sont calculées par le bloc de calcul 5 à l'aide de la relation (22).

Le clavier d'entrée 9 permet de mettre en action le bloc d'analyse de pics 6 pour lui faire analyser un pic déterminé et d'introduire dans le fichier 8 et éventuellement dans la banque de données 7 les données concernant les nouveaux solutés ou éluants. L'imprimante 10 indique essentiellement la nature des solutés identifiés et leur concentration dans l'échantillon.

Le procédé n'est évidemment pas limité aux systèmes chromatographiques sans suppression chimique et aux méthodes conductométriques. Il peut être utilisé pour des méthodes de mesure d'absorption de rayonnement, de pH et de caractéristiques électrochimiques par exemple. Les grandeurs physico-chimiques utiles pour les calculs peuvent être alors différentes de celles qu'on a indiquées, mais elles sont de toutes façons accessibles quand on a résolu l'équation (15).

Pour les systèmes chromatographiques 4 suppression chimique, il faut en outre disposer des proportions $\alpha'_{n-i}$ de chacune des espèces résultant de la dissociation du soluté après suppression chimique ainsi que de la charge moyenne m' des ions de soluté dans cette solution. Les solutions utilisées dans les calculs sont les mêmes à l'exception de la relation (14) dans laquelle on fait $[M^+] = 0$ et dans laquelle on remplace m par m', de la relation (15) dans laquelle on fait $C_m = 0$ et $mC_X = m'C_X$, et de la relation (21) dans laquelle on fait $\alpha_{n-i} = \alpha'_{n-i}$. m' et $\alpha'_{n-i}$ sont calculés par les expressions (11) et (12) dans lesquelles m=m' et $\alpha_{n-i} = \alpha'_{n-i}$.

Il est enfin clair que l'invention s'applique aussi à des procédés dans lesquels on ne rechercherait que la concentration de certains solutés dans un mélange complexe.

**Revendications**

1. Procédé de détermination de la concentration d'un soluté dans un éluat, le soluté étant au moins en partie dissocié sous forme d'au moins une espèce anionique, l'éluat étant également constitué notamment d'ions hydrogène et d'espèces appartenant au système acido-basique d'un éluant au moins en partie dissociées sous forme d'au moins une espèce anionique, la dissociation de ces espèces ainsi que celles du soluté produisant notamment des ions hydrogène, la capacité de l'éluant étant gouvernée notamment par des réactions d'échange d'ions préalablement mises en jeu dans la colonne de séparation appartenant à un appareil de chromatographie, entre les espèces anioniques de l'éluant et celles du soluté, ainsi qu'éventuellement par d'autres réactions chimiques, notamment d'échange d'ions et de neutralisation acido-basique dans un réacteur dit de suppression chimique, caractérisé en ce qu'il consiste :
   - à calculer la concentration des ions hydrogène en fonction uniquement de la concentration du soluté à l'aide :
   - des constantes de dissociation des espèces acides susceptibles d'être mises en jeu,
   - des proportions, invariables pour un soluté donné dans un système chromatographique donné, d'anions du soluté qui s'échangent dans la colonne de séparation avec les espèces éluantes de diverses valences,
   - des proportions des espèces du soluté en solution dans la colonne de séparation,
   - de la concentration totale des espèces constitutives de l'éluant et de la concentration de l'espèce cationique associée aux espèces éluantes salines dans l'éluant,
   - puis à calculer les concentrations dans l'éluat de certains au moins de ses constituants, en fonction de la concentration du soluté, à l'aide de la concentration des ions hydrogène,
   - puis à calculer une fonction de signal théorique composé de la superposition d'effets provenant des variations de concentration des constituants de l'éluat dont on a calculé la concentration dans l'étape précédente,
   - puis enfin à situer un signal expérimental sur la fonction de signal théorique pour en déduire la concentration du soluté.

2. Procédé de détermination de la concentration d'un soluté selon la revendication 1, caractérisé en ce que l'éluat contient des ions hydroxyde et en ce qu'on utilise la relation du produit ionique de l'eau pour déterminer la concentration des ions hydrogène.

3. Procédé de détermination de la concentration d'un soluté selon l'une quelconque des revendications 1 ou 2, caractérisé en ce que la concentration des ions hydrogène est calculée par un calcul itératif.

4. Procédé de détermination de la concentration d'un soluté selon l'une quelconque des revendications 1 à 3, caractérisé en ce que le soluté est un acide.

5. Procédé de détermination de la concentration d'un soluté selon l'une quelconque des revendications 1 à 4, caractérisé en ce que l'éluant produit, par dissociation de ses espèces, des ions hydrogène et d'autres cations, la concentration de ces autres cations étant utilisée pour calculer la concentration des ions hydrogène.

6. Procédé de détermination de la concentration d'un soluté selon l'une quelconque des revendications 1 à 5, caractérisé en ce que le signal expérimental et la courbe de signal théorique sont obtenus respectivement par mesure et calcul de conductivité des constituants ioniques de l'éluat.

7. Procédé de détermination de la concentration d'un soluté selon l'une quelconque des revendications 1 à 6, caractérisé en ce qu'on effectue plusieurs mesures successives de concentration du soluté sur un pic chromatographique pour obtenir par intégration la quantité totale de soluté présent dans l'éluat.

8. Procédé de détermination de la concentration d'un soluté selon l'une quelconque des revendications 1 à 7, caractérisé en ce que les Proportions des diverses espèces anioniques de l'éluant présentes dans l'éluat sont déterminées par un calibrage préliminaire en injectant une quantité connue de soluté dans la colonne et en enregistrant les variations du signal expérimental correspondant.

9. Procédé de détermination de la concentration d'un soluté selon la revendication 8, caractérisé en ce que le calibrage préliminaire consiste à effectuer les étapes suivantes :
   - relever le volume d'éluat écoulé entre deux relevés, de part et d'autre d'un signal expérimental maximal correspondant au sommet d'un pic chromatographique, pour lesquels le signal expérimental est la moyenne du signal expérimental maximal et d'un signal correspondant à l'absence de soluté,
   - calculer une concentration maximale théorique du soluté,
   - relever le signal expérimental maximal puis à calculer une concentration maximale expérimentale du soluté en fonction des proportions des diverses espéces anioniques de l'éluant Présentes dans l'éluat,
   - déduire une approximation desdites proportions en situant la concentration maximale théorique sur la fonction de la concentration maximale expérimentale,
   - déduire à l'aide de l'approximation desdites proportions et de relevés de signaux expérimentaux de points répartis sur le pic chromatographique les concentrations expérimentales du soluté en ces points,
   - intégrer les concentrations expérimentales du soluté en ces points en fonction des volumes d'éluat écoulés entre ces points pour obtenir une quantité expérimentale approchée du soluté,
   - comparer la quantité expérimentale approchée du soluté et la quantité connue de soluté injecté, et
   - ajuster l'approximation desdites proportions puis répéter les étapes de déduction des concentrations expérimentales du soluté, d'intégration et de comparaison jusqu'à ce que la quantité expérimentale approchée du soluté et la quantité connue de soluté injecté coïncident.

## Patentansprüche

1. Verfahren zur Konzentrationsbestimmung eines gelösten Stoffes in einem Eluat,
   wobei der gelöste Stoff wenigstens teilweise in mindestens eine Anionenart dissoziiert ist,
   das Eluat ebenfalls aus insbesondere Wasserstoffionen und aus Spezies besteht, die dem Säure-Base-System des Elutionsmittels zugehören und die wenigstens teilweise in mindestens eine Anionenart dissoziiert sind,
   die Dissoziation dieser Spezies wie jener des gelösten Stoffes insbesondere Wasserstoffionen erzeugt,
   die Wirksamkeit des Elutionsmittels bestimmt wird insbesondere durch Ionenaustauschreaktionen, die vorher zwischen den Anionenarten des Elutionsmittels und denen des Gelösten in der zu einem chromatographischen Apparat gehörenden Trennkolonne stattfanden, sowie gegebenfalls durch andere chemische Reaktionen, insbesondere Ionenaustausch und Säure-Base-Neutralisation in einem sogenannten chemischen Suppressionsreaktor,

dadurch gekennzeichnet, daß es darin besteht:

- die Konzentration der Wasserstoffionen als Funktion allein der Konzentration des Gelösten zu berechnen mit Hilfe:
- der Dissoziationskonstanten der sauren Spezies, die beteiligt sein können,
- der für einen gegebenen gelösten Stoff in einem gegebenen chromatographischen System unveränderlichen Anteile der Anionen des Gelösten, die in der Trennkolonne gegen die eluierenden Stoffe der verschiedenen Valenzen ausgetauscht werden,
- der Anteile der Spezies des gelösten Stoffes in Lösung in der Trennkolonne,
- der Gesamtkonzentration der konstitutiven Spezies des Elutionsmittels und der Konzentration der Kationenart, die den salzförmigen eluierenden Stoffen im Elutionsmittel zugeordnet ist,
- dann die Konzentrationen im Eluat für wenigstens gewisse seiner Konstituenten zu berechnen als Funktion der Konzentration des Gelösten, mit Hilfe der Konzentration der Wasserstoffionen,
- weiter eine theoretische Signalfunktion zu berechnen, die zusammengesetzt ist aus der Überlagerung von Effekten, die herrühren von Konzentrationsvariationen der Bestandteile des Eluats, deren Konzentrationen im vorangegangenen Schritt berechnet wurden,
- schließlich das experimentelle Signal der theoretischen Signalfunktion gleichzusetzen, um daraus die Konzentration des Gelösten abzuleiten.

**2.** Verfahren zur Konzentrationsbestimmung eines gelösten Stoffes nach Anspruch 1, dadurch gekennzeichnet, daß das Eluat Hydroxylionen enthält und daß die Beziehung für das Ionenprodukts des Wassers benutzt wird, um die Konzentration der Wasserstoffionen zu bestimmen.

**3.** Verfahren zur Konzentrationsbestimmung eines gelösten Stoffes nach einem der Ansprüche 1 oder 2, dadurch gekennzeichnet, daß die Konzentration der Wasserstoffionen durch eine Iteration berechnet wird.

**4.** Verfahren zur Konzentrationsbestimmung eines gelösten Stoffes nach einem der Ansprüche 1 bis 3, dadurch gekennzeichnet, daß der gelöste Stoff eine Säure ist.

**5.** Verfahren zur Konzentrationsbestimmung eines gelösten Stoffes nach einem der Ansprüche 1 bis 4, dadurch gekennzeichnet, daß das Elutionsmittel durch Dissoziation seiner Spezies Wasserstoffionen und andere Kationen bildet, wobei die Konzentration dieser anderen Kationen dazu benutzt wird, die Konzentration der Wasserstoffionen zu berechnen.

**6.** Verfahren zur Konzentrationsbestimmung eines gelösten Stoffes nach einem der Ansprüche 1 bis 5, dadurch gekennzeichnet, daß das experimentelle Signal und die theoretische Signalkurve durch Messung beziehungweise Berechnung der Leitfähigkeit der ionischen Bestandteile des Eluats erhalten werden.

**7.** Verfahren zur Konzentrationsbestimmung eines gelösten Stoffes nach einem der Ansprüche 1 bis 6, dadurch gekennzeichnet, daß an einem chromatographischen Peak mehrere aufeinanderfolgende Messungen der Konzentration des gelösten Stoffes gemacht werden, um durch Integration die Gesamtmenge des im Eluat vorhandenen gelösten Stoffes zu erhalten.

**8.** Verfahren zur Konzentrationsbestimmung eines gelösten Stoffes nach einem der Ansprüche 1 bis 7, dadurch gekennzeichnet, daß die Anteile der verschiedenen Anionenarten des Elutionsmittels, die im Eluat vorhanden sind, durch vorläufige Kalibrierung bestimmt werden, indem eine bekannte Menge des gelösten Stoffes in die Kolonne injiziert und der Verlauf des entsprechenden experimentellen Signals aufgezeichnet wird.

**9.** Verfahren zur Konzentrationsbestimmung eines gelösten Stoffes nach Anspruch 8, dadurch gekennzeichnet, daß die vorläufige Kalibrierung aus den folgenden Schritten besteht:

- Bestimmen des Volumens des ausgeflossenen Eluats zwischen zwei Auswertepunkten auf der einen und auf der anderen Seite eines maximalen experimentellen Signals, das dem Gipfel des chromatographischen Peaks entspricht, für die das experimentelle Signal der Mittelwert aus dem maximalen experimentellen Signal und dem Signal bei Abwesenheit des gelösten Stoffes ist,
- Berechnen der maximalen theoretischen Konzentration des gelösten Stoffes,
- Bestimmen des maximalen experimentellen Signals, um dann die maximale experimentelle Konzentration des Gelösten als Funktion der Anteile der verschiedenen im Eluat vorhandenen Anionensorten des Elutionsmittels zu berechnen.
- Ableiten einer Näherung für diese Anteile, indem die maximale theoretische Konzentration mit der experimentellen Funktion der maximalen Konzentration gleichgesetzt wird.
- Ableitung, mit Hilfe der Näherung für diese Anteile und der Ablesewerte experimenteller Signale in Punkten, die auf dem chromatographischen Peak verteilt sind, der experimentellen Konzentrationen des gelösten Stoffes in diesen Punkten,
- Integrieren der experimentellen Konzentrationen des gelösten Stoffes in diesen Punkten als Funktion des eluierten Volumens zwischen diesen Punkten, um eine genäherte experimentelle Menge des gelösten Stoffes zu erhalten.
- Vergleichen der experimentellen Näherungswerte für die Menge des gelösten Stoffes mit der bekannten Menge des injizierten gelösten Stoffes, und
- Korrektur der Näherung besagter Anteile, dann Wiederholen der Schritte zur Herleitung der experimentellen Konzentrationen des gelösten Stoffes, der Integration und des Vergleichs, bis die genäherte experimentelle Menge des gelösten Stoffes und die bekannte Menge des injizierten gelösten Stoffes zusammenfallen.

## Claims

**1.** Process for the determination of the concentration of a solute in an eluate, the solute being at least partly dissociated in the form of at least one anionic species, the eluate being also constituted by hydrogen ions and species belonging to the acid-base system of an eluent at least partly dissociated in the form of at least one anionic species, the dissociation of these species and of those of the solute producing hydrogen ions, the composition of the eluate being more particularly governed by exchange reactions of ions previously used in the separating column between the anionic species of the eluent and those of the solute, as well as possibly other chemical reactions and in particular ion exchange and acid - base neutralization reactions in a so-called chemical suppression reactor, characterized in that it comprises calculating the concentration of the hydrogen ions solely as a function of the concentration of the solute with the aid of dissociation constants of acid species liable to be involved, invariable proportions for a given solute in a given chromatographic system of anions of the solute, which are exchanged in the separating column with eluent species of different valencies, proportions of the species of the solute dissolved in the separating column, the total concentration of the constituent species of the eluent and the concentration of the cationic species associated with the saline eluent species in the eluent, then calculating the concentrations in the eluate of at least some of its constituents, as a function of the solute concentration with the aid of the concentration of the hydrogen ions, then calculating a theoretical signal function consisting of superimposing effects resulting from concentration variations of the constituents of the eluate whose concentration has been calculated in the preceding stage end finally placing an experimental signal on the theoretical signal function in order to deduce therefrom the concentration of the solute.

**2.** Process for determining the concentration of a solute according to claim 1, characterized in that the eluate contains hydroxide ions and in that the relation of the ionic product of the water is used for determining the concentration of the hydrogen ions.

**3.** Process for the determination of the concentration of a solute according to any one of the claims 1 or 2, characterized in that the concentration of the hydrogen ions is calculated by an iterative calculation.

**4.** Process for the determination of the concentration of a solute according to any one of the claims 1 to 3, characterized in that the solute is an acid.

**5.** Process for the determination of the concentration of a solute according to any one of the claims 1 to 4, characterized in that the eluent is produced by the dissociation of its species, hydrogen ions and other cations, the concentration of said other cations being used for calculating the concentration of the hydrogen ions.

**6.** Process for determining the concentration of a solute according to any one of the claims 1 to 5, characterized in that the experimental signal and the theoretical signal curve are respectively obtained by measuring and calculating the conductivity of the ionic constituents of the eluate.

7. Process for determining the concentration of a solute according to any one of the claims 1 to 6, characterized in that several successive concentration measurements of the solute are carried out on a chromatographic peak to obtain, by integration, the total solute quantity present in the eluate.

8. Process for determining the concentration of a solute according to any one of the claims 1 to 7, characterized in that the proportions of the different anionic species of the eluent present in the eluate are determined by a preliminary calibration, by injecting a known solute quantity into the column and by recording the corresponding experimental signal variations.

9. Process for determining the concentration of a solute according to claim 8, characterized in that the preliminary calibration consists of plotting the eluate volume which has flowed between two readings, on either side of a maximum experimental signal corresponding to the apex of a chromatographic peak, for which the experimental signal is the mean value of the maximum experimental signal and a signal corresponding to the absence of solute, calculating a maximum theoretical concentration of the solute, plotting the maximum experimental signal and then calculating a maximum experimental concentration of the solute as a function of the proportions of various anionic species of the eluent present in the eluate, deducing an approximation of said proportions by placing the maximum theoretical concentration on the maximum experimental concentration function, deducing the experimental concentration of the solute at these points with the aid of the approximation of said proportions and readings of experimental signals of points distributed over the chromatographic peak, integrating the experimental concentrations of the solute at these points as a function of the eluate volumes which have flowed between them to obtain an approximate experimental solute quantity, comparing the approximate experimental solute quantity and the known injected solute quantity and adjusting the approximation of said proportions, followed by the repetition of the stages of deducing the experimental concentrations of the solute, integration and comparison until the approximate experimental solute quantity and the known injected solute quantity coincide.

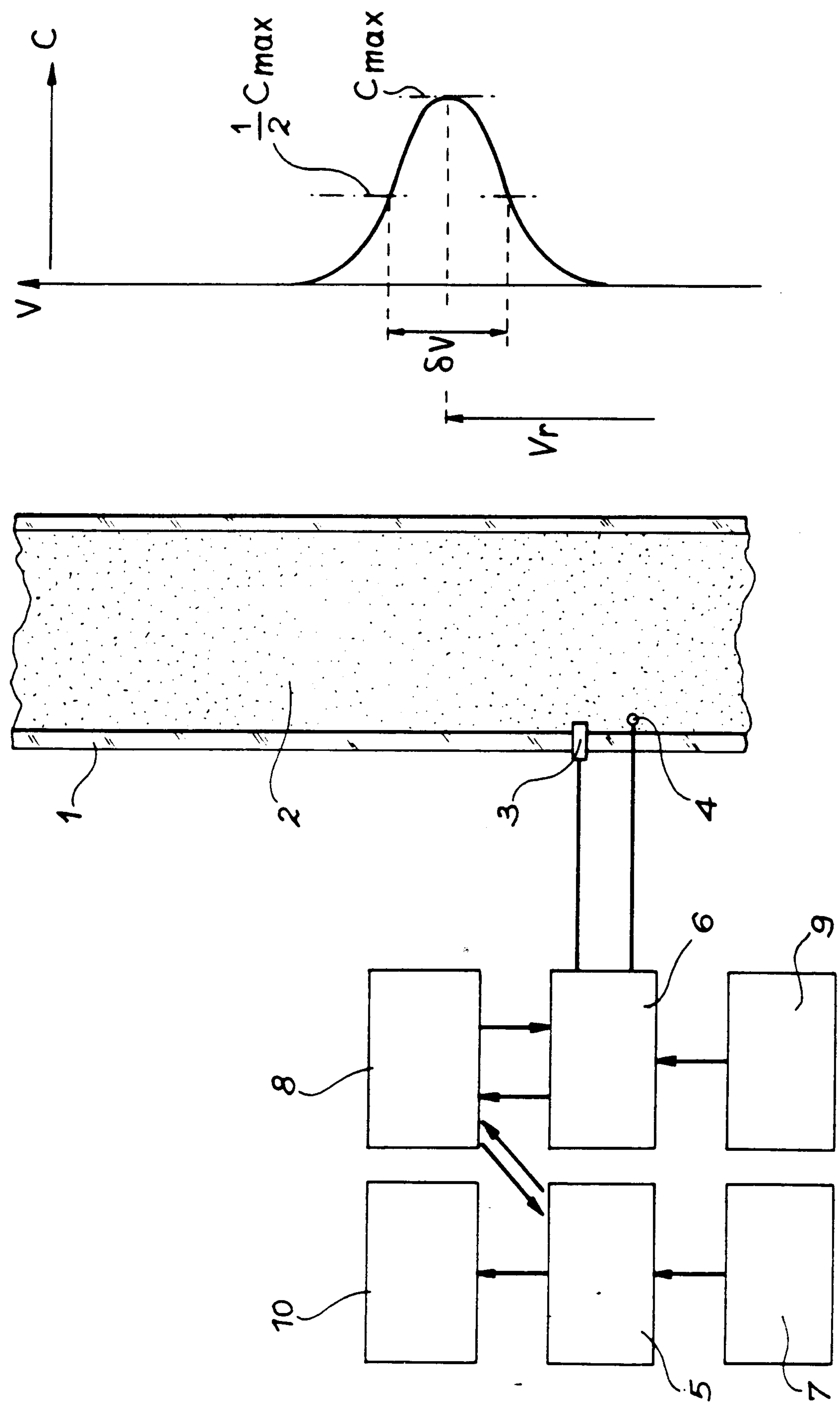

C
V
1/2 Cmax
Cmax
δV
Vr
1
2
3
4
5
6
7
8
9
10